# EUROPEAN PATENT APPLICATION

(11) **EP 3 244 433 A1**
(43) Date of publication of application: **15.11.2017**
(21) Application number: 16168840.3
(22) Date of filing: 10.05.2016
(51) Int. Cl.: H01H 33/668, G01L 21/34, H01J 41/06

(54) **VACUUM INTERRUPTER WITH MEANS FOR DETERMINING THE RESIDUAL GAS PRESSURE AND METHOD OF DETERMINING THE SAME**

(71) Applicant: ABB Schweiz AG, 5400 Baden (CH)
(72) Inventor: Gentsch, Dietmar, Dr., 40882 Ratingen (DE); Hencken, Kai, Dr., 79539 Lörrach (DE); Kaufmann, Tobias, Dr., 8053 Zürich (CH)
(74) Representative: Schmidt, Karl Michael

(57) **Abstract**

The invention relates to a vacuum interrupter with at least one movable and at least one fixed contact, arranged inside of a vacuum tight ceramic housing, wherein the vacuum interrupter is provided with means to determine the actual residual gas pressure inside the vacuum tight ceramic housing. In order to measure the actual residual pressure inside a vacuum interrupter, even when the vacuum interrupter is in operation, and to realize it with compact means, the invention is, that the means for determing the residual gas pressure inside the vacuum tight ceramic housing are means for generating an inhomogenous magnetic field inside the vacuum tight ceramic housing, operating as an electron trap, and that furthermore one of the contacts represents an anode, and a further element implemented inside the vacuum interrupter represents the cathode for measing a current, which represents the aforesaid residual gas pressure.

## Description

The invention relates to a vacuum interrupter with at least one movable and at least one fixed contact, arranged inside of a vacuum tight ceramic housing, wherein the vacuum interrupter is provided with means to determine the actual residual gas pressure inside the vacuum tight ceramic housing, according to the preamble of claim 1 and 6.

### Background of the invention

Vacuum interrupters require a vacuum pressure below 10⁻¹ to 10⁻²Pa in order to work reliabily, that is to interrupt current and to withstand the high voltage in open state. Therefore the vacuum pressure needs to be guaranteed throughout their lifetime, that is more than 20 years. There have been some discussion regarding this issue in recent years.

The missing vacuum monitoring is not needed in most cases but is a topic of discussion. Especially for critical applications an easy monitoring system is seen as a big advantage. Vacuum pressure measurements are therefore an important diagnostics method for the future. Already now companies are providing a service to check the status of installed vacuum interrupters, which are reaching the end of their guaranted lifetime.

A number of techniques have been proposed for this. The most often used one is the magnetron principle. This method requires the application of an external magnetic field together with an electric potential between either the contacts, or the contacts and the shield in order to initiate a magnetron discharge current. Other techniques using the high-voltage withstand voltage, field emission currents or the introduction of vacuum gauge, e.g., based on the (micro) Pirani principle have been proposed and tested. The two main advantages of the magnetron principle are its very low measurement range well below 10⁻²Pa and the strong relationship of the measurement principle (the ionization of the residual gas) with the breakdown in the gas. The magnetron gauge measures directly electric properties and would therefore be less dependent on the gas type or composition than other methods.

The invention proposes a way to extend or reuse the already studied basic magnetron gauge principle (also called Penning gauge) by using a new magnetic field configuration. This has a number of advantages compared to the current one using a homogenous field: A measurement while the vacuum interrupter is in operation is possible and certain vacuum interrupter types can be analyzed, which are not accessible with the current approach. In addition the magnets needed can be much smaller and cheaper.

### State-of-the-art

The magnetron principle is used regularly to test the vacuum status of the vacuum interrupter after production. These magnetron measurements are "offline" measurements. Either the vacuum interrupter needs to be removed from the system and sent in or some portable equipment, for example fexible coils, need to be installed in the field. All current measurement systems are based on the use of a homogenous magnetic field configuration.

One advantage is, that the geometrical alignment of the vacuum interrupter and the magnets is less critical in this case.

Attaching a (separate) magnetron to a vacuum interrupter has been tried before by several groups (US4163130,EP-944105, JP-200205398, Mao et al. IEEE Trans. Diel. EI. Ins. 14, p.179ff (2007)). This can be done by either attaching a standard magnetron gauge system or by forming a custom magnetron in a small attachment area to the vacuum interrupter. Both techniques are not useful in practice as additional parts need to be connected to the vacuum interrupter. Each additional connection, especially those which are not based on the standard metal-ceramics brazing technique, reduce the reliability of the vacuum interrupter and are therefore seen as contraproductive for the whole system.

An example for monitoring the vacuum degree in a vacuum interrupter is dislosed in the WO 2002049057 A1. This is done by detecting the continuity of electric discharge between an inner electrode an a shielding element as vacuum degrades, and the duration of electric charge.

It has to be considered, that during switching operation the vacuum is as such physically influenced by that. Furthermore, each switching with occurance of a light arc is as a plasma treatment to the contact piece surfaces, which sputters contact material atoms into the vacuum, which then getters residual gas atoms on the inner surface of the vacuum interrupter. So the measurement of the actual residual pressure in combination is inaccurate.

### Object of the invention

The object of the invention is, to measure the actual residual pressure inside a vacuum interrupter, even when the vaccum interrupter is in operation, and to realize it with compact means.

### Invention

The invention is, that the means for determing the residual gas pressure inside the vacuum tight ceramic housing are means for generating an inhomogeous magnetic field inside the vacuum tight ceramic housing, operating as an electron trap, and that furthermore one of the contacts represents an anode, and a further element implemented inside the vacuum interrupter represents the cathode for measing a current, which represents the aforesaid residual gas pressure.

The measurement of pressure is based on the so called magnetron principle. The magnetron principle relies on the fact, that a combination of a magnetic and electric field can be used to form an electron trap, which is then used to initiate a magnetron current as the basic measurement principle. The inhomogenity of the field is used as an advantage to form traps for vacuum interrupter designs that don't have them for homogenous magnetric fields or by restricting the magnetic field to certain areas inside the vacuum interrupter. Therefore one can come up with designs where the measurement can be done while the vacuum interrupter is in operation.

Using a inhomogenous magnetic field increases the flexibility of the possible electron traps. The easiest design criteria is to form a magnetic field with field lines crossing the equipotential lines towards the cathode at a large angle close to 90 degree. In this way the electrons, following approximately the magnetic field lines in cyclotron motions, will be guided towards and repelled from the cathode. On the anode side the magnetic field lines should be approximately parallel to the equipotential lines. The electrons are then guided parallel to the anode and cannot reach it. In addition the inhomogenous magnetic fields lead to a "magnetic mirror" effect when field lines converge. This help in addition with the trapping of the electrons. It is therefore advantageous to have inhomogenous field configurations with converging field lines towards the cathode.

By using a strong inhomogenous magnetic field configuration together with an electric field an electron trap can be formed as the essential ingredient for a magnetron trap. The magnetic field is axial symmetric with respect to the vacuum interrupter and uses part of the top or bottom area of the vacuum interrupter as the trap. Only the magnetic field generated from outside magnets and an additional electrode need to be added. Alternatively the inhomogenity can be formed on the outer side of the vacuum interrupter allowing to form traps in electric field configurations where the equipotential lines and a homogenous magnetic field would otherwise be parallel.

In a further advantageous embodiment, the means for generating an inhomogenous magnetic field inside the vacuum tight ceramic housing is embellished by at least one permanant magnet which is/are arranged outside the vacuum tight ceramic housing. By that the introduction of inhomogenous magnetic fields is easy to realize.

In a further advantageous embodiment, the means for generating an inhomogenous magnetic field inside the vacuum tight ceramic housing is embellished alternatively by at least one coil magnet which is/are arranged outside the vacuum tight ceramic housing.

Further advantageous is, that the aforesaid cathode is an integral part of one of the metallic end caps of the vacuum interrupter. So only an electrical connection to current measuring means has to be provided.

In a further advantageous embodiment, a shielding element inside the vacuum interrupter is alternatively used as cathode or anode. Important is only the electrical connection from the shielding inside the vacuum interrupter to an outside measuring terminal.

The invention for a method of determing the inside pressure of a vacuum interrupter, with vacuum interrupter with at least one movable and at least one fixed contact, arranged inside of a vacuum tight ceramic housing with metallic end caps, wherein the vacuum interrupter is provided with means to determine the actual residual gas pressure inside the vacuum tight ceramic housing, is that the means for determing the residual gas pressure inside the vacuum tight ceramic housing are means for generating an inhomogenous magnetic field inside the vacuum tight ceramic housing, operating as an electron trap, and that furthermore one of the contacts represents an anode, and a further element implemented inside the vacuum interrupter represents the cathode for measuring a current, which represents the aforesaid residual gas pressure, and that the so measured actual current value is calibrated back to the actual residual pressure value.

Importantly advantageous is, that by that method, the use of already implemented means inside the vaccum interrupter can be easily combined with externally arrangeable means, so that the measurement of the residual gas pressure inside the vacuum interrupter can be realized with low constructive expense, and with high accuracy for pressure determination.

Embodiments of the invention are shown in the drawing.
- Figure 1:: a magnetic field and additional electrode configuration similar to those of a "sputtering magnetron" using a permanent magnet (a) or an electromagnet (b).
- Figure 2:: sputtering magnetron like configuration with a shield forming the anode

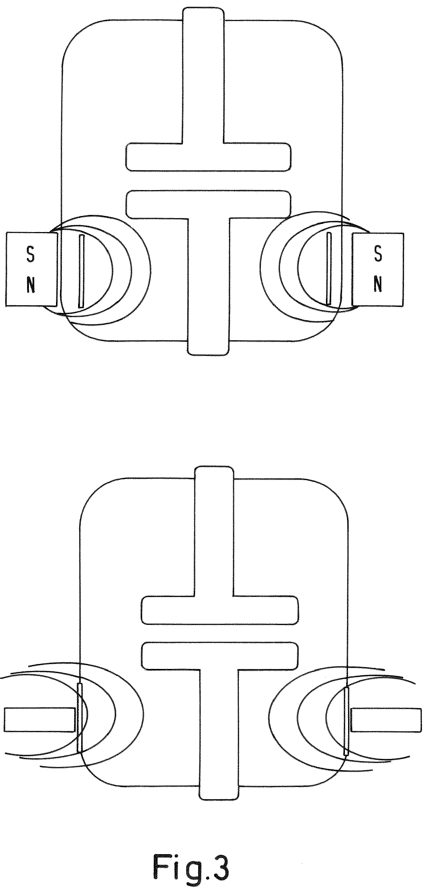

- Figure 3:: magnetic field configuration with the magnetron trap formed by the magnet at the outer side of the vaccum interrupter
- Figure 4:: Magnetic field configuration with the outer magnet positioned below the VI in order to form a magnetron trap at the bottom of the VI.
- Figure 5:: Magnetic field configuration using several magnets in order to shape the inhomogeneity of the field even more. The use of two repeling magnets allows to form fields with a stronger curvature.

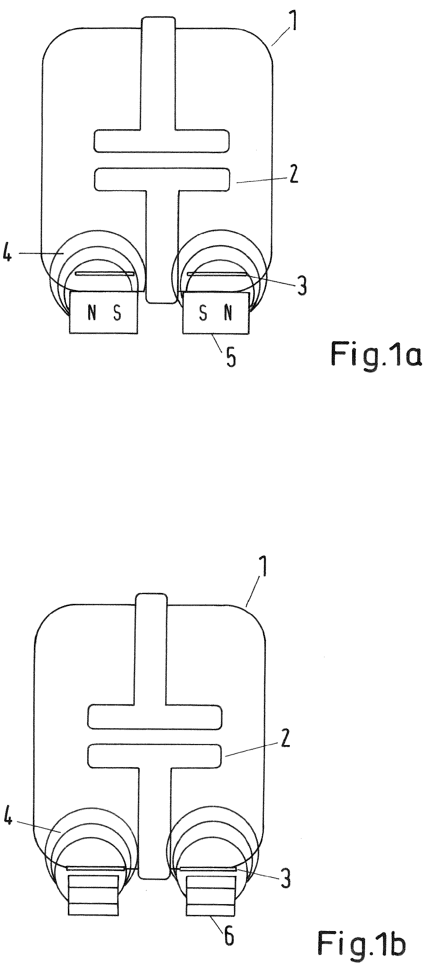

In the following, a number of embodiments are shown, where different inhomogenous magnetic field configurations are shown and their advantages discussed. The so called "sputtering magnetron like configuration" is shown in Fig. 1 (a) and (b).

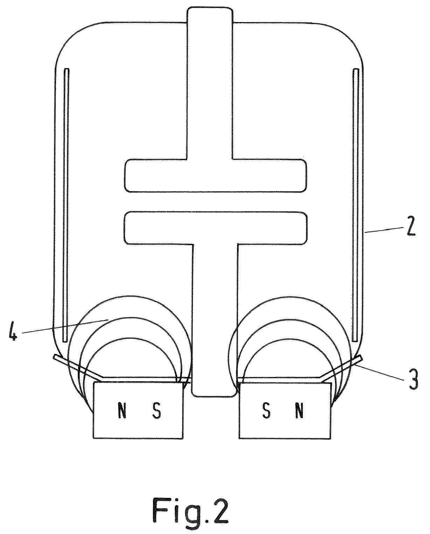

In this configuration an inhomogenous magnetic field is formed using either a permanent magnet (a) or a magnetic coil (b) at the lower (or upper) end of the chamber. The main advantage of this configuration is that the magnetic field is as far away as possible from the contact gap. The additional electrode necessary can either be introduced at the bottom or by segmenting the bottom cup. Two possible configurations, using either a permanent magnet or a magnetic coil are shown in Fig. 1. The cathode is introduced in these examples as either an additional element in the VI or as part of the bottom cup. An alternative configuration with a shield forming the anode are shown in Fig. 2. The magnetic field design with the magnetic field lines entering the cathode at an angle and being parallel to the equipotential lines close to the anode is clearly seen. Therefore these configurations allow for an electron trap to be formed, which is indicated by the gray ellipse.

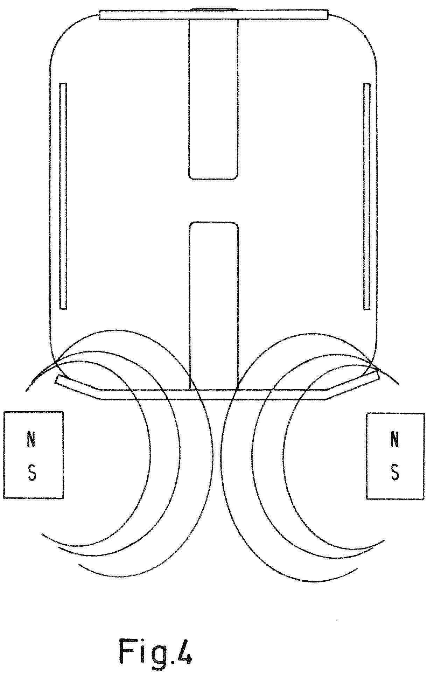

A further embodiment is the side magnetron configuration, shown in Fig. 4.. In this configuration the magnets are positioned at the side of the vacuum interrupter. The cathode is formed either by the existing shield or again by a segmentation of the vacuum interrupter. The advantages of this configuration are the more stable magnetron discharge, which was found experimentally and that the magnet is less influenced by the strong magnetic fields formed by short circuit interruption currents flowing through the vacuum interrupter. Two configurations with a permanent magnet and a coil are shown. The magnetic field design with the magnetic field lines crossing the cathode and being parallel to the equipotential lines close to the anode is clearly visible as well.

A further embodiment is the flat contact configuration. This is a variation of the last configuration. Please note that this configuration is not able to be analyzed using a homogenous magnetic field, as the magnetic field lines are parallel to the equipotential lines due to the flat contacts shown in this case.
The flat stem-contact system does not allow an analysis using a homogenous magnetic field, whereas the inhomogenous field allows to close the trap towards the cathode.

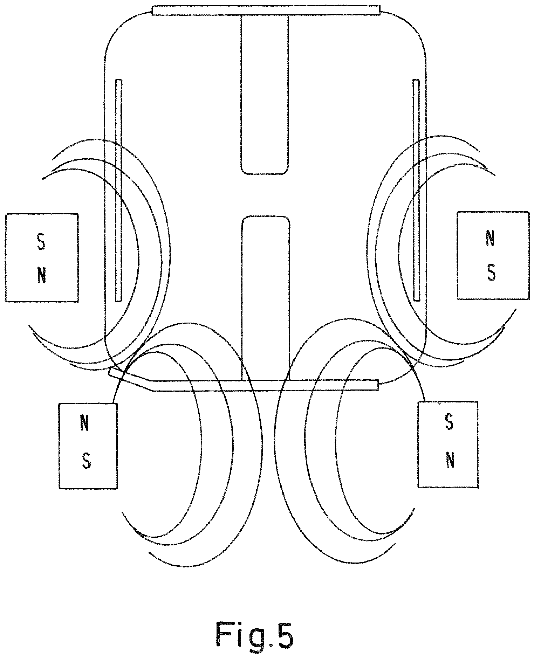

More complex magnetic field configuration using more than one magnet can also be used:
Depending on the vacuum interrupter design more than one magnet can be used or might be needed to form the inhomogenous field according to the design criteria. E.g using to repeling magnets a stronger curvature can be achieved. One possible embodiment is shown in Fig. 5. Using more than one magnet allows to bend the magnetic field lines more. In addition the magnetic field strength inside the VI can be enhanced in this way.

So the embodiment of Figure 5 shows using a second permanent magnet the bending of the magnetic field lines can be enhanced.

### Numbering

- 1: vacuum interrupter
- 2: Anode
- 3: Cathode
- 4: Electron Trap
- 5: Permanent ringmagnet
- 6: Ringcoil (electromagnet)

## Claims

1. Vacuum interrupter with at least one movable and at least one fixed contact, arranged inside of a vacuum tight ceramic housing with metallic end caps, wherein the vacuum interrupter is provided with means to determine the actual residual gas pressure inside the vacuum tight ceramic housing,
**characterized in**
**that** the means for determing the residual gas pressure inside the vacuum tight ceramic housing are means for generating an inhomogenous magnetic field inside the vacuum tight ceramic housing, operating as an electron trap, and that furthermore one of the contacts represents one electrode, and a further element implemented inside the vacuum interrupter represents the second electrode for measuring a current, which represents the aforesaid residual gas pressure.

2. Vacuum interrupter, according to claim 1,
**characterized in**
**that** the means for generating an inhomogenous magnetic field inside the vacuum tight ceramic housing is embellished by at least one permanent magnet which is/are arranged outside the vacuum tight ceramic housing.

3. Vacuum interrupter, according to claim 1,
**characterized in**
**that** the means for generating an inhomogenous magnetic field inside the vacuum tight ceramic housing is embellished by at least one coil magnet which is/are arranged outside the vacuum tight ceramic housing.

4. Vacuum interrupter, according to claim 1, 2 or 3,
**characterized in**
**that** the aforesaid cathode is an integral part of one of the metallic end caps of the vacuum interrupter.

5. Vacuum interrupter, according to one of the aforesaid claims,
**characterized in**
**that** a shielding element inside the vacuum interrupter is used as cathode.

6. Method of determing the inside pressure of a vacuum interrupter, Vacuum interrupter with at least one movable and at least one fixed contact, arranged inside of a vacuum tight ceramic housing with metallic end caps, wherein the vacuum interrupter is provided with means to determine the actual residual gas pressure inside the vacuum tight ceramic housing,
**characterized in**
**that** the means for determing the residual gas pressure inside the vacuum tight ceramic housing are means for generating an inhomogenous magnetic field inside the vacuum tight ceramic housing, operating as an electron trap, and that furthermore one of the contacts represents an anode, and a further element implemented inside the vacuum interrupter represents the cathode for measing a current, which represents the aforesaid residual gas pressure, and that the so measured actual current value is calibrated back to the actual residual pressure value.
